Europäisches Patentamt

European Patent Office

Office européen des brevets

(19)

(11) Veröffentlichungsnummer: **0 211 261 B1**

(12) **EUROPÄISCHE PATENTSCHRIFT**

(45) Veröffentlichungstag der Patentschrift: 25.09.91     (51) Int. Cl.⁵: **H04M 3/22**

(21) Anmeldenummer: **86109392.0**

(22) Anmeldetag: **09.07.86**

(54) **Verfahren zur automatischen Prüfung eines Kommunikationssystems, insbesondere einer Fernsprechnebenstellenanlage.**

(30) Priorität: **31.07.85 DE 3527484**

(43) Veröffentlichungstag der Anmeldung:
**25.02.87 Patentblatt 87/09**

(45) Bekanntmachung des Hinweises auf die
Patenterteilung:
**25.09.91 Patentblatt 91/39**

(84) Benannte Vertragsstaaten:
**AT BE CH DE FR IT LI NL SE**

(56) Entgegenhaltungen:
**DE-A- 2 935 694**
**DE-A- 3 327 090**
**DE-A- 3 330 889**
**DE-C- 3 215 672**

(73) Patentinhaber: **Siemens Aktiengesellschaft**
**Wittelsbacherplatz 2**
**W-8000 München 2(DE)**

(72) Erfinder: **Muyssen, John**
**Draaitopstraat 61**
**B-9050 Evergem(BE)**

EP 0 211 261 B1

**Beschreibung**

Die Erfindung betrifft ein Verfahren zur automatischen Prüfung von peripheren Schnittstelleneinheiten eines einsatzbereiten Kommunikationssystems, insbesondere einer Fernsprechnebenstellenanlage, wobei das Kommunikationssystem von einer, ggf. weiteren Teilsteuereinheiten hierarchisch übergeordneten, Steuereinrichtung, für die eine Zugriffmöglichkeit zu entsprechenden Speichereinheiten besteht, gesteuert wird und in den Schnittstelleneinheiten Zustandsinformationen über an das Kommunikationssystem angeschlossene Endeinrichtungen und/oder über angeschlossene Leitungen zum Zwecke der durch die Steuereinrichtung vorzunehmenden weiteren Bearbeitung vermittels entsprechender Indikationsstellen erfaßbar sind und wobei im Rahmen der Prüfung eine externe Koppeleinrichtung verwendet wird.

Damit die an die Betriebssicherheit von Kommunikationsanlagen zu stellenden Anforderungen erfüllt werden, sind die entsprechenden Prüfungen durchzuführen. Zu diesem Zweck werden eigenständige Prüfeinrichtungen an das Kommunikationssystem, z.B. an eine Fernsprechnebenstellenanlage angeschlossen. Mit einer solchen Prüfeinrichtung, die in der Regel große Abmessungen aufweist, ist auch unter Berücksichtigung der kundenindividuellen Varianten-Vielfalt ein Funktionstest des Hardwarebereiches und eine Systemprüfung zur Beurteilung der vorgesehenen Betriebsabläufe möglich. Sie ist so ausgelegt, daß ohne wesentliche Änderungen der Einrichtung Fernsprechvermittlungsanlagen unterschiedlicher Größenordnung mit unterschiedlichem Anlagenaufbau und/oder unterschiedlichen Funktionsmöglichkeiten überprüfbar sind. Es werden keine geschlossenen Vermittlungsabläufe getestet, sondern nur ihre Elemente, das heißt bestimmte Vermittlungsfunktionen. In der Prüfeinrichtung sind die zur Prüfung solcher Funktionskomplexe notwendigen Nachbildungseinrichtungen vorhanden. Die Prüfprogramme werden den genannten unterschiedlichen Gegebenheiten angepaßt. Die Prüfung läuft so ab, daß die Lokalisierung festgestellter Fehler möglichst baugruppengenau erfolgen kann. Wegen der großen räumlichen Abmessungen einer solchen universellen Prüfeinrichtung ist diese vornehmlich für die Prüfung im Herstellerwerk einsetzbar.

Durch die deutsche Offenlegungsschrift DE-A1-29 35 694 ist eine Schaltungsanordnung zur Herstellung von Prüfverbindungen in einer rechnergesteuerten Nachrichtenvermittlungsanlage bekannt. Es werden für Prüfzwecke Sondersätze eingesetzt, die in gleicher Weise wie die regulären Sätze an Zugänge der Koppelanordnungen angeschlossen sind. Die Einrichtungen zur Durchführung von Prüffunktionen sind unterteilt, und zwar in solche, die individuell in den Sondersätzen angeordnet sind und in solche, die teilzentral in den Satzsteuerwerken angeordnet oder über diese erreichbar sind. Jedem dieser Sondersätze ist eine seine Anschlußlage kennzeichnende Adresse und eine weitere Adresse als "Pseudoadresse" zugeordnet. Über die erstgenannte Adresse erfolgt die normale Steuerung eines jeden Sondersatzes, während er über die Pseudoadresse Anreize abgibt, wenn irgendeine der Sonderprozeduren in den Steuerwerken aufgerufen werden soll. Damit wird erreicht, daß durch die Verzweigung in betriebstechnische Sonderprozeduren die vermittlungstechnischen Normalprozeduren weder programmtechnisch noch dynamisch belastet sind.

Durch die deutsche Offenlegungsschrift DE-A1-33 30 889 ist eine Schaltungsanordnung zur Überprüfung der Funktionstüchtigkeit einer rechnergesteuerten Fernsprechvermittlungsanlage bekannt, bei der im Prüffall an die Einschubplätze der Verbindungssätze Nachbildungsbaugruppen eingebracht werden. Abhängig von der Art dieser Nachbildungsbaugruppe wird diese an der Endgeräteseite mit jeweils einem der den nachzubildenden Endgerät zuzuordnenden Verbindungssatz verkabelt. Die vorgenommene Zuordnung wird der zentralen Steuereinrichtung über eine mit Hilfe eines Betriebsterminals vorzunehmende Parametereingabe mitgeteilt. Die unter Einbeziehung einer solchen Nachbildungsbaugruppe ablaufenden vermittlungstechnischen Funktionen werden durch Prüfprogramme ermöglicht, die z. B. jeweils vor der gewünschten Überprüfung einspeicherbar sind. Es werden durch die Integration der Prüfeinrichtung in die Vermittlungsanlage weitestgehend die Such- und 'Scann'-Routinen der Anlage benutzt, so daß der Umfang der Prüfprogrammkomplexe dadurch vermindert wird.

Im Rahmen der sogenannten Sicherheitstechnik können auch vor der Inbetriebnahme eines Kommunikationssystem Steuerungsabläufe veranlaßt werden, durch die eine Überprüfung bestimmter Funktionseinheiten ohne irgendwelche zusätzliche Einrichtungen möglich ist. Auf diese Weise kann u. a. grundsätzlich die Steuereinrichtung z. B. durch das Einleiten und Bewerten bestimmter Lese- und Schreibvorgänge, für die sie mitbildenden Speichereinheiten und auch das Koppelnetz getestet werden. Eine Überprüfung im Rahmen der Sicherheitstechnik ist nur in einem beschränkten Umfang möglich, da man insbesondere zu peripheren Schnittstelleneinheiten keinen Zugriff hat.

Es ist die Aufgabe der Erfindung, eine über die Möglichkeiten der Sicherheitstechnik hinausgehende vollständige Prüfung eines Kommunikationssystems, insbesondere einer Fernsprechnebenstellenanalge in einfacher Weise mit geringstem Aufwand an zusätzlichen Einrichtungen und ohne den Einsatz von Nachbildungseinrichtungen zu ermöglichen.

Dies wird bei einem Verfahren der eingangs genannten Art dadurch erreicht, daß die leitungsseitigen Ausgänge der Schnittstelleneinheiten gleicher oder unterschiedlicher Betriebsart durch die dauerhaft zugeordnete oder bedarfsweise zuzuordnende externe Koppeleinrichtung variabel miteinander verbindbar sind, daß durch ein im Prüffall durch die Steuereinrichtung zu verarbeitendes Prüf- und Diagnoseprogramm durch jeweils eine der funktionsunüblich miteinander verbundenen Schnittstelleneinheiten eine auch im normalen Vermittlungsbetrieb aus anderer Ursache auftretende bestimmte Anreizsituation für die jeweils andere Einheit hergestellt wird, daß dadurch die für diese einzelnen Anreize vorhandenen Indikationsstellen aktivierbar sind und daß im Rahmen der durch das Prüfprogramm vorgegebenen Bedingungen ihre Reaktionen von der Steuereinrichtung wie im normalen Vermittlungsbetrieb abgefragt werden, wodurch die ordnungsgemäße Funktion feststellbar ist und daß die Einstellung der externen Koppeleinrichtung durch Einstellinformationen erfolgt, die aufgrund der im Prüfprogramm enthaltenen Ablauffolge durch von der Steuereinrichtung zu betätigende und zur Auswertung von Anzeige- und/oder Steuereinheiten bereits vorhandene Schalterelemente übermittelt werden.

Es ist erfindungsgemäß nur eine einzige zusätzliche Einrichtung, nämlich die externe Koppeleinrichtung zur unmittelbaren Zusammenschaltung der leitungsseitigen Anschlüsse, das heißt der a/b-Aderanschlüsse von zwei Verbindungs- und/oder Teilnehmersätzen, notwendig. Damit wird es unter Einfluß eines entsprechenden Prüfprogrammes, das der vorhandenen zentralen Steuereinrichtung bestimmte Bedingungen vorgibt, ermöglicht, daß insbesondere die normalerweise über eine Teilnehmeranschlußleitung oder über eine externe Verbindungsleitung gelieferten Anreize in einem der miteinander verbundenen Sätze generiert werden. Ohne Nachbildungseinrichtungen können somit dadurch die im jeweils anderen Satz vorhandenen Indikationsstellen für diese Anreize ansprechen, falls kein Fehler vorliegt. Es werden dabei weitestgehend die für die Anlage sowieso vorhandenen Einstell- und Abfrageroutinen mitverwendet. Es kann somit beispielsweise die Schleifen-, Ruf- und Erdtastenindikation durchgeführt werden. Die hierfür notwendigen Anreize kommen dabei erfindungsgemäß aus jeweils einem der über die externe Koppeleinrichtung miteinander verbundenen Sätzen.

Gemäß einer Weiterbildung wird das Prüf- und Diagnoseprogramm, das unter anderem aussagt, wie einzelne Tätigkeiten nacheinander durchzuführen sind und wie deren Verkettung erfolgen soll in einem freien Speicherbereich der der Steuereinrichtung zugänglichen Speichereinheit eingeschrieben. Es kann auch in einer steckbaren Speichereinheit abgespeichert sein, die dann bei Bedarf auf eine entsprechende Trägereinheit aufsteckbar ist. In einfacher Weise kann die externe Koppeleinrichtung als steckbare Einheit ausgebildet sein, die im Prüffall durch eine entsprechende Anordnung am Hauptverteiler des Kommunikationssystems die erforderlichen leitungsseitigen Zusammenschaltungen sowie die Anschaltung an die genannten Schalterelemente vornimmt. Weitere vorteilhafte Ausgestaltungen der Erfindung sind den übrigen Unteransprüchen zu entnehmen.

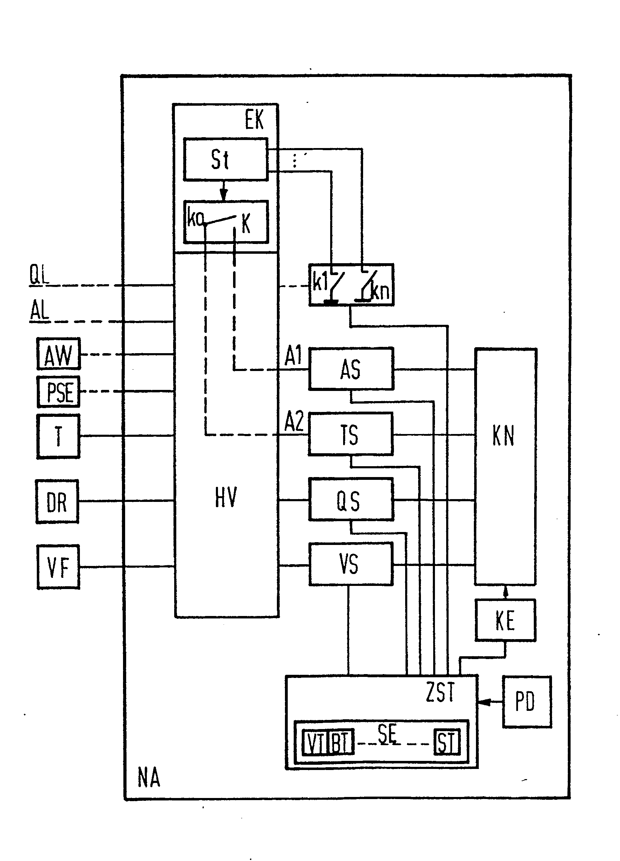

Nachfolgend wird anhand der Zeichnung ein Ausführungsbeispiel der Erfindung beschrieben, das nur die für das Verständnis erforderlichen Einzelheiten enthält. Grundsätzlich kann das erfindungsgemäße Verfahren an jeder Kommunikationsanlage eingesetzt werden. Es ist in gleicher Weise bei einer volldigitalen als auch bei einer analogen Vermittlungsanlage anzuwenden. Das Ausführungsbeispiel soll die Anwendung bei einer analogen speicherprogrammierten Nebenstellenanlage NA mit einer digitalen Steuerung zeigen. Stellvertretend für die an der Vermittlungsanlage angeschlossenen Nebenstellen ist die Teilnehmerstelle T dargestellt. Weiterhin ist eine Vermittlungsfernsprechstation VF, über die durch eine Vermittlungstätigkeit einer sie bedienenden Person eine gewünschte Verbindung zu einer Teilnehmerstelle signalisiert und anschließend hergestellt werden kann, dargestellt. Verbindungswünsche werden beispielsweise dann zunächst von der Vermittlungsfernsprechstation entgegengenommen, wenn sich die angeforderte Teilnehmerstelle im Besetzt-Zustand befindet, wenn diese Teilnehmerstelle den Anruf aktiviert hat oder wenn der betreffende Teilnehmer sich nicht meldet. Besteht für eine ankommende Verbindung oder für eine gewünschte abgehende Verbindung keine entsprechende Berechtigung der betreffenden Teilnehmerstation, so wird generell zu der Vermittlungsfernsprechstation abgeworfen. Durch eine betriebstechnische Eingabe kann jede beliebige Teilnehmerstation, die entsprechend ausgerüstet ist, als Vermittlungsfernsprechstation festgelegt werden. Es wird dann gleichzeitig eine entsprechende Abspeicherung und Bestimmung der für eine solche Funktion notwendigen Berechtigungen vorgenommen.

An Verbindungssätzen ist ein Amtssatz AS und ein Querverbindungssatz QS dargestellt. Ersterer wird für Verbindungen benötigt, die über die anzuschließende Amtsleitung AL verlaufen, während der Verbindungssatz QS für Verbindungen herangezogen wird, die über die Querverbindungsleitung QL zwischen der Anlage NA und einer weiteren Nebenstellenanlage bestehen. Ist die Fernsprechvermittlungsstation VF aktiv, so wird der in einem solchen Fall zuständige Satz VS herangezogen. Die Steuerung dieser peripheren Einheiten kann auch unter Einbeziehung von nicht weiter dargestellten Teilsteuereinheiten erfolgen. Es ist eine zentrale Steuereinrichtung ZST übergeordnet. Diese überwacht und dirigiert dann auch die Teilsteuereinheiten.

Für jede Teilnehmerstelle T ist ein Teilnehmersatz TS vorgesehen. Dieser enthält jeweils in nicht dargestellter Weise unter anderem eine Indikationsstelle, die Zustandsänderungen auf der jeweiligen Anschlußleitung erkennt. Die teilnehmerseitig ausgegebenen Informationen, die zu der zentralen Steuereinrichtung ZST gelangen, haben dann Einstellbefehle für die im Teilnehmersatz enthaltenen Funktionsschalter zur Folge. Solche Einstellbefehle werden in gleicher Weise den übrigen Verbindungssätzen übermittelt. Aufgrund einer solchen Einstellinformation wird die Betätigungsart eines Funktionsschalters festgelegt und gleichzeitig der betreffende Funktionsschalter ausgewählt.

Der Einsteller KE hat die Aufgabe, alle Koppelpunkte, die für eine Verbindung im Koppelnetz KN benötigt werden, zu betätigen. Durch die Verbindungssätze werden die für den Aufbau, das Halten und das Auslösen einer Verbindung unmittelbar am Koppelnetz KN erforderlichen Vermittlungstechnischen Schaltvorgänge ausgeführt. Die für bestimmte Steuerabläufe notwendigen Programme sind in Speichern, die der zentralen Steuereinrichtung ZST zugehörig bzw. zugänglich sind, enthalten. So sollen beispielsweise in der Speichereinheit VT die vermittlungstechnischen Informationen, das heißt die für die Realisierung der logischen Verknüpfungen und der Steuerabläufe notwendigen Programmfolgen abgespeichert sein. Es werden darin auch Kurzzeitdaten,die z.B. den Zustand der Verbindungswege, den Schleifenschluß der Teilnehmeranschlußleitung, die gewählten Ziffern oder Gebühreninformationen betreffen, eingespeichert. Durch den vorgenommenen Vergleich der neu aufgenommenen Daten mit den zuletzt abgespeicherten Daten werden beispielsweise Zustandsänderungen erkannt und demzufolge die solchen Änderungen zugeordneten Abläufe aufgerufen.

Die Speichereinheit BT soll die für die betriebstechnischen Vorgänge notwendigen Informationen enthalten. In ihr sind z.B. die veränderbaren Kundendaten-Informationen und diejenigen Informationen abgespeichert, die Dienste und Sonderfunktionen der Fernsprechnebenstellenanlage betreffen. In der Speichereinheit ST sollen die für die Einleitung und für die Durchführung von sicherheitstechnischen Überprüfungen notwendigen Informationen abgespeichert sein.

Im Rahmen der sicherheitstechnischen Abläufe können auch ohne tatsächlichen Vermittlungsbetrieb bestimmte Fehler festgestellt werden. Diese Fehlerfeststellung betrifft insbesondere die Steuereinrichtung und das Koppelnetz. So kann man beispielsweise zur Feststellung, ob der ganze Weg über das Koppelnetz einwandfrei geschaltet ist, aus dem als Zentralkomponente vorhandenen Tongenerator einen der durch ihn erzeugten Töne einspeisen. Bei einer einwandfreien Durchschaltung im Koppelnetz ergibt sich aufgrund des nicht definierten Abschlusses des durchgeschalteten Weges eine Reflexion, die mit einem entsprechenden Tonempfänger registriert werden kann.

Bei einer Vermittlungsanlage, die sich noch nicht im Vermittlungsbetrieb befindet, lassen sich durch die Sicherheitstechnik bestimmte periphere Schnittstelleneinheiten wie z.B. die Teilnehmersätze und die Verbindungssätze nicht in den Test miteinbeziehen. Um diese Schnittstelleneinheiten prüfen zu können, wird eine externe Koppeleinrichtung EK im Zusammenhang mit einem entsprechenden Prüf- und Dioagnoseprogramm PD eingesetzt. Dieses Prüf- und Diagnoseprogramm kann z.B. von einer entsprechenden Diskette in einen freien Speicherbereich des der Zentralsteuerung ZST zugänglichen Speichers eingeschrieben werden. Es besteht die Möglichkeit, dieses Programm in einer steckbaren Speichereinheit abzulegen, die dann jeweils im Bedarfsfall auf die entsprechend vorbereitete Trägerplatte für derartige Speicherbausteine aufgesteckt wird. Im Ausführungsbeispiel ist ein derartiger Steckspeicher, zu dessen Inhalt die zentrale Steuereinrichtung ZST Zugriff hat, mit PD bezeichnet.

Während der Prüfung der Anlage müssen also die Proms, die das Prüf- und Diagnoseprogramm enthalten, aufgesteckt sein. Durch dieses spezielle Programm werden der zentralen Steuereinrichtung ZST der Vermittlungsanlage NA bestimmte Bedingungen auferlegt. Es kann damit ohne weitere Vorleistungen ein optimaler Prüfablauf sichergestellt werden. Durch das Prüfprogramm werden einzelnen Tätigkeiten und die Art der Verkettung dieser Tätigkeiten bestimmt. Für die einzelnen Tätigkeiten selbst werden die hierfür bereits für vermittlungstechnische und betriebstechnische Abläufe abgespeicherten Programmkomponenten herangezogen. Durch die externe Koppeleinrichtung EK, die durch das zur Verfügung gestellte Prüfprogramm und durch die zentrale Steuereinrichtung steuerbar ist, werden einzelne Teilnehmersätze und/oder Verbindungssätze über ihre leitungsseitigen Anschlüsse miteinander wahlweise gekoppelt. Um dies zu ermöglichen, wird die als steckbare Koppeleinrichtung ausgebildete Einheit EK auf den in der Anlage vorhandenen Hauptverteiler HV aufgesteckt. Die Einheit EK kann dabei hinsichtlich ihrer Steckbarkeit so ausgebildet sein, daß entweder alle leitungsseitigen Anschlüsse oder nur ein Teil dieser leitungsseitigen Anschlüsse damit kontaktmäßig erfaßt wird. Der Hauptverteiler HF dient als Schnittstelle zwischen den Außenleitungen des Fernsprechnetzes, das heißt den Teilnehmeranschlußleitungen, den Amtsleitungen und den Querverbindungsleitungen und den Innenleitungen der Vermittlungsanlage NA. An ihnen werden die notwendigen Rangierungen z.B. beim Aufheben und Verlegen von Teilnehmerstellen vorgenommen. Man hat also über den Hauptverteiler HV Zugriff zur Teilnehmer- und zur Vermittlungsseite. Im Ausführungsbeispiel wird dies dadurch kenntlich gemacht, daß sowohl die Leitungen als auch die Teilnehmersätze und die übrigen Verbindungssätze symbolhaft jeweils auf einen Anschlußpunkt dieses Hauptverteilers geführt sind. Die Anschlußpunkte für einen Amtssatz AS und die für einen Teilnehmersatz TS sind in der vereinfachten Darstellung beispielhaft mit A1 und A2 bezeichnet. Die aufsteckbare Koppeleinrichtung EK besteht aus dem eigentlichen Koppelteil K, in dem über entsprechend zu betätigende Kontakte, symbolisch dargestellt durch den Kontakt k0, die im üblichen Vermittlungsbetrieb nicht vorgesehene Verbindung zwischen den einzelnen Sätzen, die jeweils an das Koppelnetzwerk KN angeschaltet sind, bewirkt wird. Diese Anschaltungen im Koppelteil K werden durch eine Steuereinheit St, die grundsätzlich aus einer Zählanordnung bestehen kann, bewirkt. Die Ansteuerinformationen für diese Steuereinrichtung St werden durch die Betätigungen der Kontakte k1 bis kn übermittelt. Diese als mechanische Kontakte dargestellten Schalterelemente sind bereits in der Anlage für die Ansteuerung anderer Einheiten vorgesehen, wobei ihre Betätigung durch die Steuereinrichtung ZST unter dem Einfluß des Prüfprogrammes veranlaßt wird. Über diese Kontakte k1 bis kn können im Normalbetrieb unterschiedliche Einheiten angesteuert werden. Als Beispiel sei die Ansteuerung einer Personensucheinrichtung, eines Türöffners und die Ansteuerung einer Einrichtung für allgemein hörbare oder sichtbare Signale genannt. Die zuletzt erwähnte Einrichtung kann beispielsweise eine sogenannte Amtsklingel AW darstellen.

Durch diese über die Kontakte k1 bis kn weitergegebenen und von der Einrichtung St aufgenommenen Einstellinformationen wird festgelegt, welche Sätze jeweils miteinander verbunden werden sollen. Die insgesmat vorhandenen Sätze werden dabei in unterschiedlichsten Kombinationen miteinander verbunden. Es werden Reaktionen ausgelöst, die sowieso im System vorgesehen sind und es wird die Reaktion der durch die Steuereinrichtung ZST gescannten Indikationsstellen, die in einem der jeweils miteinander verbundenen Sätze vorhanden sind, festgestellt. Auf diese Weise können unter anderem Kurzschlüsse zwischen den a/b-Adern am Hauptverteiler, an den Teilnehmeranschlüssen oder in den Amtssätzen registriert werden. Weiterhin ist durch die Simulierung entsprechender Vorgänge die Schleifen-, Ruf-, und Erdindikation zu überprüfen. Es kann auch eine Überwachung des Gebührenindikators und der für die Aufnahme der Wahlinformationen vorhandenen Organe erfolgen. Durch die Einbeziehung der in der Peripherie vorhandenen Kontakte sind keine zusätzlichen Steuerverbindungen für die externe Koppeleinrichtung EK erforderlich. Gleichzeitig werden damit auch diese betreffenden Schalterelemente auf ihre ordnungsgemäße Funktion hin mitüberprüft.

Wie in der Zeichnung angedeutet, soll über die Anschlußpunkte A1 und A2 vermittels der externen Koppeleinrichtung EK ein Amtssatz AS und ein Teilnehmersatz TS miteinander verbunden sein. Bei den jeweils miteinander gekoppelten Sätzen sind verschiedene Prüfungen möglich. Der beispielsweise in Hauptanschlußtechnik ausgeführte Amtssatz hat eine Indikationsstelle, die üblicherweise bei einem vom Amt kommenden Ruf anspricht. Im Prüffall wird nun zur Überprüfung ihrer Funktion die normalerweise für einen Teilnehmer bestimmte Rufeinstellung im System ausgelöst. Durch den angeschalteten Ruf kann die Rufindikation eines Amtssatzes überwacht werden, da diese Indikationsstelle durch die zentrale Steuereinrichtung ZST gescannt wird. Damit ist gleichzeitig feststellbar, ob die Rufeinstellung für die zugeordnete Teilnehmerstelle abgeschaltet werden kann oder ob dies in fehlerhafter Weise nicht möglich ist.

Als weiteres Beispiel sei die Überwachung der Schleifenindikation eines Teilnehmersatzes genannt. Hierzu wird, unter dem Einfluß des Prüfprogramms durch sowieso in den Hauptprogrammen vorhandenen Programmteile im Amtssatz die Schließung der Schleife bewirkt. Damit wird durch den angekoppelten Amtssatz eine Belegung vorgetäuscht. Bei der vorgenommenen Abtastung kann dann sowohl die Schleifeneinstellung im Amtssatz als auch die Schleifenindikation auf ihre einwandfreie Funktion hin überprüft werden.

Bei Amtssätzen ist es im Zusammenhang mit der Verbindungsherstellung zu einer Gegenanlage möglich, die Erdung der Leitung vorzunehmen. Wird nun im Prüffall eine derartige Erdung veranlaßt, so kann in dem jeweils angekoppelten Teilnehmersatz die Erdindikation überwacht werden. Das gleiche trifft dann auf die Einstellung der Erdung im Amtssatz zu.

Des weiteren kann die Abgabe von Wahlimpulsen aus dem Amtssatz aktiviert werden, und es ist auch eine Prüfung der Gebührenweichen in den Amtssätzen möglich. Vermittels des Generators, der im Normalfall eine Erneuerung der Gebührenimpulse zur teilnehmerindividuellen Registrierung bewirkt, kann mit den abgegebenen Gebührenimpulsen der Gebührenindikator überwacht werden.

Für die Überprüfung sämtlicher Amts- und Teilnehmersätze werden diese zur Durchführung der beispielhaft genannten Überprüfungen in allen möglichen Kombinationen miteinander verbunden. Wird ein Fehler registriert, so kann zur Fehlerlokalisierung, das heißt zur Feststellung, ob dieser Fehler in dem miteinander verbundenen Amtssatz oder in dem Teilnehmersatz vorhanden ist, ein bestimmter Amtssatz mit anderen Teilnehmersätzen und umgekehrt verbunden werden. Wird dann der gleiche Fehler noch einmal registriert, so ist es sehr wahrscheinlich, daß der Fehler im Amtssatz bzw. im Teilnehmersatz liegt.

Um zu überprüfen, ob kommende und/oder gehende Verbindungen möglich sind, können durch den vorhandenen Hörtongenerator im Rahmen der für die Anlage sowieso vorgesehenen Abläufe zur Prüfung Hörtöne sowohl an den Amtssatz als auch an den Teilnehmersatz angeschaltet werden. Es ist beispielsweise keine gehende Verbindung bei einem Amtssatz möglich, falls bei dem damit gekoppelten Teilnehmersatz kein Hörton erkannt wird. Wird sowohl im Teilnehmersatz als auch im damit gekoppelten Amtssatz kein Hörton erkannt, so ist weder eine kommende noch eine gehende Verbindung möglich.

Unter dem Einfluß des Prüfprogrammes PD kann durch die externe Koppeleinrichtung EK auch eine Verbindung zwischen zwei Querverbindungssätzen QS erfolgen. Zur Überprüfung ihrer Funktionstüchtigkeit wird bei dieser Gegeneinanderschaltung zweier Querverbindungssätze der gleichen Anlage auf dem einen Querverbindungssatz eine gehende Belegung und auf dem anderen Querverbindungssatz eine kommende Belegung simuliert. Bei der Abtastung der darin enthaltenen Indikationsstellen werden Fehler erkannt. Bei der Überprüfung können die unterschiedlichen Signalisierungsverfahren, die für solche Querverbindungssätze gelten, berücksichtigt werden. Wird bei den vorgenommenen Überprüfungen für die nur einzelne Beispiele genannt werden, ein Fehler festgestellt, so kann dieser vermittels einer angeschalteten Druckeinrichtung DR ausgedruckt werden. Es ist auch möglich, einen festgestellten Fehler auf dem vorhandenen Display des Vermittlungsfernsprechers VF mit einer hierfür festgelegten Codeinformation anzuzeigen. Dieser Vermittlungsfernsprecher kann auch als Eingabegerät verwendet werden, wenn bestimmte Prüfschritte durchgeführt werden sollen. Es ist dann die für den betreffenden Schritt festgelegte Kennzahl einzuwählen. Durch die Einbeziehung des Vermittlungsfernsprechers kann dann gleichzeitig die einwandfreie Funktion seiner Anzeigeeinheiten mitgetestet werden.

**Patentansprüche**

1. Verfahren zur automatischen Prüfung von peripheren Schnittstelleneinheiten (AS, TS, QS) eines einsatzbereiten Kommunikationssystems, insbesondere einer Fernsprechnebenstellenanlage, wobei das Kommunikationssystem von, einer ggf. weiteren Teilsteuereinheiten hierarchisch übergeordneten, Steuereinrichtung (ZST), für die eine Zugriffsmöglichkeit zu entsprechenden Speichereinheiten besteht, gesteuert wird und in den Schnittstelleneinheiten Zustandsinformationen über an das Kommunikationssystem angeschlossene Endeinrichtungen (T, VF) und/oder über angeschlossene Leitungen (QL, AL) zum Zwecke der durch die Steuereinrichtung vorzunehmenden weiteren Verarbeitung vermittels entsprechender Indikationsstellen erfaßbar sind und wobei im Rahmen der Prüfung eine externe Koppeleinrichtung (EK) verwendet wird, **dadurch gekennzeichnet,** daß die leitungsseitigen Ausgänge der Schnittstelleneinheiten (AS, TS, QS) gleicher oder unterschiedlicher Betriebsart durch die dauerhaft zugeordnete oder bedarfsweise zuzuordnende externe Koppeleinrichtung (EK) variabel miteinander verbindbar sind, daß durch ein im Prüffall durch die Steuereinrichtung (ZST) zu verarbeitendes Prüf- und Diagnoseprogramm (PD) durch jeweils eine der funktionsunüblich miteinander verbundenen Schnittstelleneinheiten (TS, AS) eine auch im normalen Vermittlungsbetrieb aus anderer Ursache auftretende bestimmte Anreizsituation für die jeweils andere Einheit hergestellt wird, daß dadurch die für diese einzelnen Anreize vorhandenen Indikationsstellen aktivierbar sind und daß im Rahmen der durch das Prüfprogramm vorgegebenen Bedingungen ihre Reaktionen von der Steuereinrichtung (ZST) wie im normalen Vermittlungsbetrieb abgefragt werden, wodurch die ordnungsgemäße Funktion feststellbar ist und daß die Einstellung der externen Koppeleinrichtung (EK) durch Einstellinformationen erfolgt, die aufgrund der im Prüfprogramm enthaltenen Ablauffolge durch von der Steuereinrichtung zu betätigende und zur Ansteuerung von Anzeige- und/oder Steuereinheiten bereits vorgesehene Schalterelemente (k1....kn) übermittelt werden.

2. Verfahren nach Anspruch 1, **dadurch gekennzeichnet,** daß das Prüf- und Diagnoseprogramm (PD) in einem bei Bedarf heranzuziehenden freien Speicherbereich der der Steuereinrichtung (ZST) zugänglichen Speichereinheit (SE) eingeschrieben wird.

3. Verfahren nach Anspruch 1, **dadurch gekenn-**

zeichnet, daß das Prüf- und Diagnoseprogramm (PD) in einer steckbaren Speichereinheit gespeichert ist, die bei Bedarf auf eine entsprechende Trägereinheit für die Steuereinrichtung zugänglich aufgesteckt wird.

4. Verfahren nach Anspruch 1, **dadurch gekennzeichnet,** daß die externe Kcppeleinrichtung (EK) als steckbare Einheit ausgebildet ist, die im Prüffall durch eine entsprechende Anordnung am Hauptverteiler (HV) des Kommunikationssystems die erforderlichen leitungsseitigen Zusammenschaltungen sowie die Anschaltung an die genannten Schalterelemente (k1 bis kn) vornimmt.

5. Verfahren nach Anspruch 4, **dadurch gekennzeichnet,** daß durch das steckbare Anbringen am Hauptverteiler (HV) alle oder nur ein bestimmter Teil der insgesamt zu verbindenden Ausgänge erfaßt wird.

6. Verfahren nach Anspruch 1, **dadurch gekennzeichnet,** daß als Eingabe für die Aktivierung einzelner Teilabläufe und/oder als Ausgabeeinheit für die im Fehlerfall vorzunehmende diesbezügliche Signalisierung die Anzeigeeinheit der als Vermittlungsfernsprechstation (VF) dienenden Endeinrichtung verwendet wird.

## Claims

1. Method for automatically testing peripheral interface units (AS, TS, QS) of an operationally ready communication system, preferably a private branch exchange, in which the communication system is controlled by a control device (ZST), possibly hierarchically superordinate to further sub-controllers, for which access is possible to corresponding memory units and state information can be recorded in the interface units about terminal devices (T, VF) connected to the communication system and/or about connected lines (QL, AL) by means of corresponding indication points for the purpose of the further processing to be performed by the control device, and in which an external coupling device (EK) is used during the testing, characterised in that the line-side outputs of the interface units (AS, TS, QS) of the same or different operating modes can be connected variably to one another by means of the external coupling device (EK) which is permanently assigned or is assigned as required, in that a test and diagnostics program (PD) to be processed by the control device (ZST) in the case of the test brings about, by means of in each case one of the interface units (TS, AS) connected to one another in a non-customary function manner, a particular alert situation for the respective other unit that also occurs during normal switching operations for other reasons, in that as a result the indication points present for these individual alerting signals can be activated, and in that, within the framework of the conditions specified by the test program, their reactions can be interrogated by the control device (ZST) as in normal switching operations, as a result of which it is possible to establish the correct functioning, and in that the setting of the external coupling device (EK) is accomplished by means of setting information which is transferred, on the basis of the execution sequence contained in the test program, by switch elements (k1...kn) which are to be activated by the control device and are already provided for driving display and/or control units.

2. Method according to Claim 1, characterised in that the test and diagnostics program (PD) is written in a free memory area, to be used when required, of the memory unit (SE) accessible to the control device (ZST).

3. Method according to Claim 1, characterised in that the test and diagnostics program (PD) is stored in a plug-in memory unit which, when required, is plugged onto a corresponding carrier unit which is accessible to the control device.

4. Method according to Claim 1, characterised in that the external coupling device (EK) is designed as a plug-in unit which, in the case of a test, performs the necessary line-side interconnections and also the connection to the aforesaid switch elements (k1 to kn) by means of a corresponding arrangement at the main distribution frame (HV) of the communication system.

5. Method according to Claim 4, characterised in that all outputs or only some specified ones of the total number of outputs to be connected are recorded by the plug-in attachment at the main distribution frame (HV).

6. Method according to Claim 1, characterised in that the display unit of the terminal device serving as exchange telephone station (VF) is used as input for the activation of individual partial procedures and/or as output unit for the related signalling to be performed in the event of a fault.

## Revendications

1. Procédé pour tester automatiquement des unités d'interface périphériques (AS,TS,QS) d'un système de communication prêt à être utilisé, notamment d'une installation téléphonique à postes supplémentaires, et selon lequel le système de communication est commandé par un dispositif de commande (ZST), qui possède un rang hiérarchique supérieur à d'autres unités partielles de commande prévues éventuellement, et peut accéder à des unités de mémoire correspondantes, et dans lequel des informations d'état concernant les dispositifs terminaux (T,VF) raccordés au système de communication, et/ou concernant des lignes raccordées (QL,AL) peuvent être détectées, dans les unités d'interface, pour la poursuite du traitement qui doit être exécuté par le dispositif de commande au moyen de postes d'indication correspondants, et dans lequel un dispositif externe de couplage (EK) est utilisé lors du test,
caractérisé par le fait
que les sorties, du côté lignes, des unités d'interface (AS,TS,QS) qui possèdent le même type de fonctionnement ou des types de fonctionnement différents, peuvent être raccordées entre elles de façon variable au moyen du dispositif de couplage externe (EK) qui est associé en permanence ou peut être associé, le cas échéant, qu'un programme de test et de diagnostic (PD) qui doit être traité dans le cas d'un test par le dispositif de commande (ZST), établit, au moyen de l'une respective des unités d'interface (TS,AS) raccordées entre elles selon un fonctionnement inhabituelle, une situation d'excitation déterminée qui apparaît également lors du fonctionnement normal de commutation, pour une autre cause, pour l'autre unité respective, que, de ce fait, les postes d'indication présents pour ces excitations individuelles peuvent être activés et que dans le cadre des conditions prédéterminées pour le programme de test, ces réactions sont interrogées par le dispositif de commande (ZST) comme lors du fonctionnement normal de commutation, ce qui permet de déterminer le fonctionnement correct, et que le réglage du dispositif externe de couplage (EK) est réalisé au moyen d'informations de réglage, qui ont été transmises, sur la base de la séquence d'exécution contenue dans le programme de test, par des éléments de commutation (k1...kn) qui doivent être actionnés par le dispositif de commande et sont déjà prévus pour la commande des unités d'excitation et/ou de commande.

2. Procédé suivant la revendication 1, caractérisé par le fait que le programme de test et de diagnostic (PD) est enregistré dans une zone de mémoire libre, devant être utilisée en cas de besoin, de l'unité de mémoire (SE) accessible au dispositif de commande (ZST).

3. Procédé suivant la revendication 1, caractérisé par le fait que le programme de test et de diagnostic (PD) est mémorisé dans une unité de mémoire enfichable, qui est enfichée, d'une manière accessible, le cas échéant sur une unité de support correspondante pour le dispositif de commande.

4. Procédé suivant la revendication 1, caractérisé par le fait que le dispositif externe de couplage (EK) est réalisé sous la forme d'une unité enfichable, qui, dans le cas du test, réalise, au moyen d'un dispositif correspondant situé dans le répartiteur principal (HV) du système de communication, les interconnexions requises, du côté des lignes, ainsi que le raccordement auxdits éléments de commutation (k1 à kn).

5. Procédé suivant la revendication 4, caractérisé par le fait que la totalité ou seulement une partie déterminée des sorties qui doivent être globalement raccordées, est détectée par le raccordement par enfichage sur le répartiteur principal (HV).

6. Procédé suivant la revendication 1, caractérisé par le fait qu'on utilise, comme entrée pour l'activation de différents cycles partiels et/ou comme unité de sortie pour la signalisation s'y rapportant, qui doit être réalisée dans un cas d'erreur, l'unité d'affichage du dispositif terminal utilisé comme poste de commutation téléphonique (VF).